# EUROPEAN PATENT APPLICATION

(11) **EP 2 202 681 A2**
(43) Date of publication of application: **30.06.2010**
(21) Application number: 09172095.3
(22) Date of filing: 02.10.2009
(51) Int. Cl.: G06Q 30/00

(54) **Information providing system and method**

(30) Priority: 25.12.2008 JP 2008330115
(71) Applicant: FUJITSU LIMITED, Kawasaki-shi, Kanagawa 211-8588 (JP)
(72) Inventor: Sakaguchi, Kazutoshi, Kawasaki-shi, Kanagawa 211-8588 (JP); Yamaji, Takayuki, Kawasaki-shi Kanagawa 211-8588 (JP); Horie, Takefumi, Kawasaki-shi, Kanagawa 211-8588 (JP); Teranishi, Kotaro, Kawasaki-shi Kanagawa 211-8588 (JP); Morioka, Makoto, Kawasaki-shi, Kanagawa 211-8588 (JP); Hirano, Takashi, Kawasaki-shi, Kanagawa 211-8588 (JP)
(74) Representative: Ward, James Norman

(57) **Abstract**

An information providing method includes writing to a storage area of a communication apparatus embedded in a surrounding member of a transparent panel, distribution information related to preliminarily stored content; displaying on a screen provided on the transparent panel, display information related to the content for which the distribution information has been read at the writing; and transmitting to a communication terminal near the transparent panel by wireless communication, the distribution information stored in the storage area of the communication apparatus.

## Description

### FIELD

The embodiments discussed herein are related to an information providing method and system.

### BACKGROUND

In recent years, the spread of portable audio players and music data therefor, the increase in business transactions over the internet, diversification of information selection, the spread of purchasing methods enabling selection from among ranked items, merchandising by push-information based on history information, and the lack of individuality of towns has become prominent. Thus, based on such circumstances, a new scheme of providing information is desirable.

For example, there is technology that attaches to glass, a radio frequency identification (RFID) tag that is passive, extremely small and provided on a thin transparent film (refer to Japanese Laid-Open Patent Publication No. 2008-27416.)

Further, there is a technology of attaching an RFID tag to a compact liquid crystal display instrument (refer to Japanese Laid-Open Patent Publication No. 2006-53234) and one that uses a scheme of executing radiowave reception and transmission through a reader antenna on a back side of glass to which and a passive RFID tag is provided on a front side (refer to Japanese Laid-Open Patent Publication No. 2005-124973). Further, Japanese Laid-Open Patent Publication No. 2006-320801 may be referred to for an example of using a passive RFID fixed to glass to recognize fixed information.

However, under current circumstances, although a wide range of business transactions and data handling methods have become wide spread, each involves browsing/reproduction on a personal terminal, information that is on the internet and downloaded to the personal portable terminal.

Conventional technologies using RFID tags are related to crime prevention, glass recycling, anti fogging, and affixing to liquid crystal display devices; hence, are not used as a bridge between an information providing side and an information receiving side.

Although there are needs on the part of a store to want to effectively provide information to visiting customers; on the contrary, as space for providing information is limited, the provision of information to customers must be realized by the limited store space available.

The lack of individuality of towns is striking and because customer needs have become diversified, there is also demand to attract customers by providing information through a new means. However, when the remodeling of a store involves a huge cost, the introduction of such measures may be met with hesitation on the part of the store and there is a risk of the popularization of information provision by the new means being difficult. Further, a frequent changing of show window displays and layouts due to the significant lack of individuality of towns places a large burden on the store.

### SUMMARY

It is an object in one aspect of the embodiments to at least solve the above problems in the conventional technologies.

According to an aspect of an embodiment, an information providing method includes writing to a storage area of a communication apparatus embedded in a surrounding member of a transparent panel, distribution information related to preliminarily stored content; displaying on a screen provided on the transparent panel, display information related to the content for which the distribution information has been read at the writing; and transmitting to a communication terminal near the transparent panel by wireless communication, the distribution information stored in the storage area of the communication apparatus.

### BRIEF DESCRIPTION OF DRAWINGS

FIG. 1 is a view of a street, in a first embodiment, lined with stores;
FIGs. 2A to 2D are schematics of operations for providing information;
FIG. 3 is a block diagram of an information providing system and a communication terminal according to the first embodiment;
FIG. 4 is a schematic of one example of the data configuration of content information stored in a storage apparatus of a computer;
FIG. 5 is a functional diagram of the information providing system according to the first embodiment;
FIGs. 6 and 7 are flowcharts of processing by the computer in the information providing system according to the first embodiment;
FIG. 8 is a view of a street on which the store is located, in a second embodiment;
FIGs. 9A to 9C are schematics of operations for providing information according to the second embodiment;
FIG. 10 is a block diagram of an information providing system and a communication terminal according to the second embodiment;
FIG. 11 is a schematic of the data configuration of uploaded information;
FIG. 12 is a functional diagram of the information providing system according to the second embodiment;
FIG. 13 depicts processing executed by the communication apparatus according to the second embodiment;
FIG. 14 depicts processing according to the second embodiment and executed by the computer;
FIG. 15 is a block diagram of an information providing system and a communication terminal according to a third embodiment;
FIG. 16 is a schematic of one example of data configuration of content information;
FIG. 17 is a schematic of one example of the data configuration of user information;
FIG. 18 is a functional diagram of an information providing system according to the third embodiment; and
FIG. 19 is a flowchart of processing for providing information according to the third embodiment.

### DESCRIPTION OF EMBODIMENTS

Embodiments of the present invention will be explained with reference to the accompanying drawings. In the present embodiments, information is provided between an internal space (e.g., inside a facility) and an external space (e.g., outside the facility) bordered by a transparent panel (e.g., glass). When information is provided, related information is temporarily displayed on the transparent panel. In this way, the transparent panel serves as a bridge in the provision of information between a user and a facility.

A first embodiment is an example where information (distribution information) related to information (display information) displayed on a transparent panel (glass) that is a wall of a facility is transmitted to a communication terminal of a user, and the communication terminal displays, on a display screen thereof, the distribution information.

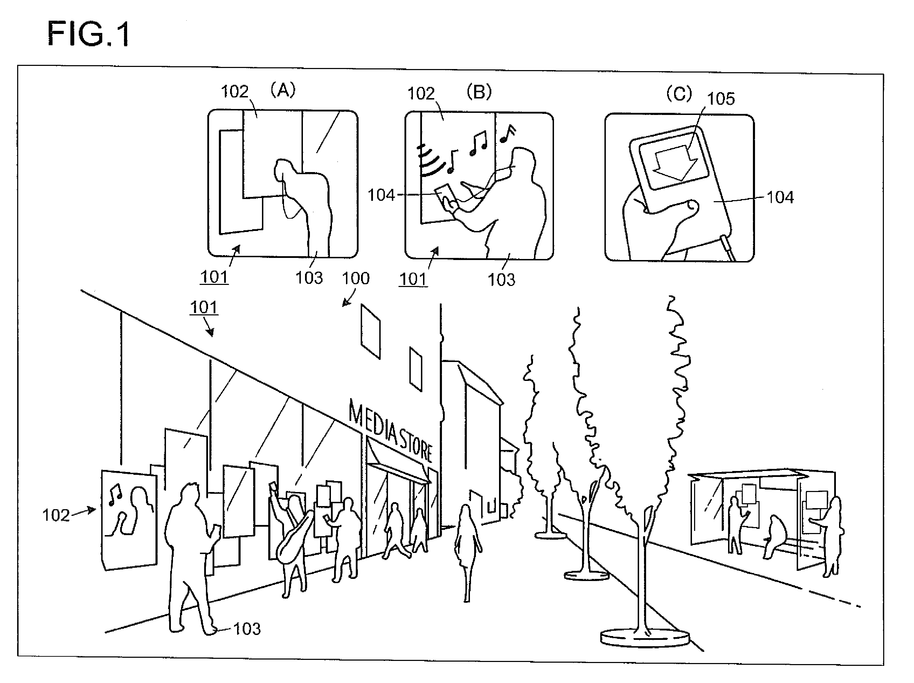

FIG. 1 is a view of a street, in the first embodiment, lined with stores. In FIG. 1, a store 100 and a bus stop oppose each other along the street. The store 100 has glass 101 that is a show window and serves as an exterior wall from which the appearance of the interior of the store 100, advertisements, merchandise on display, etc. may be viewed from outside the store 100. A transmissive screen 102 is provided on a back surface of the glass 101 and display information that the store 100 wants to provide is displayed on the transmissive screen 102. In the first embodiment, the store 100 is given as an example; however, configuration is not limited to the store 100 and may include any facility (a building, a house, a transportation facility, etc.).

When information is provided, (A) a user 103 sees, through the glass 101, display information projected on the transmissive screen 102; and if the user 103 would like further information, (B) the user 103 faces a communication terminal 104 toward the store 100 to execute communication (the counterpart of communication described hereinafter) to receive distribution information related to the display information displayed on the transmissive screen 102. (C) On a display screen 105 of the communication terminal 104, the received distribution information is displayed. Thus, in addition to the display information displayed on the transmissive screen 102, the user 103 may browse the distribution information displayed on the communication terminal 104.

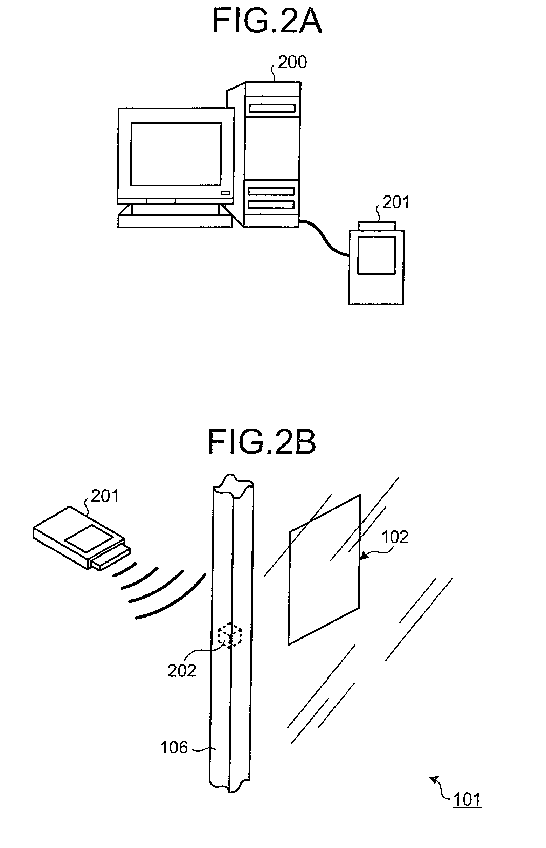

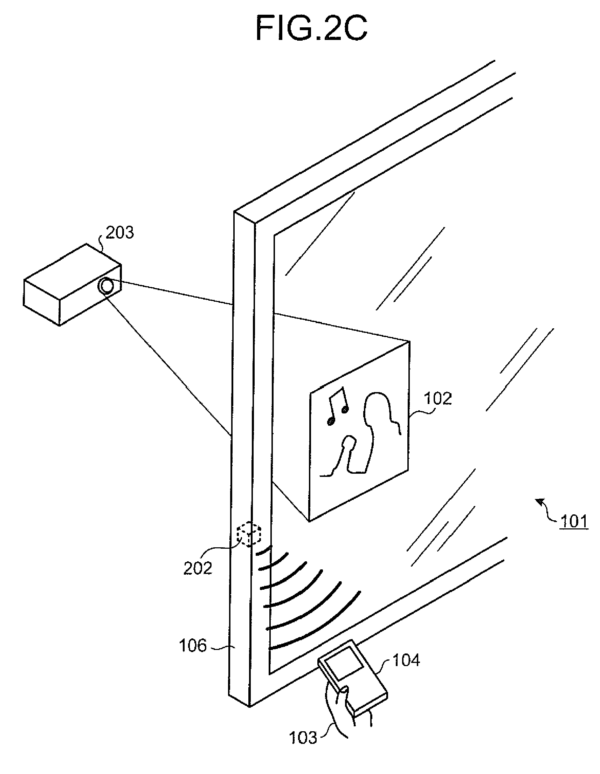

FIGs. 2A to 2D are schematics of operations for providing information. As depicted in FIG. 2A, a store clerk of the store 100 connects a reader/writer 201 to a computer 200 and downloads to the reader/writer 201, distribution information desired to be provided to customers. As depicted in FIG. 2B, the store clerk disconnects the reader/writer 201 from the computer 200 and performs contactless communication with an RFID tag 202 embedded in a frame 106 supporting the glass 101, thereby, writing the distribution information downloaded by the computer 200 to the RFID tag 202.

In this manner, without attaching the RFID tag 202 to the glass 101, the RFID 202 may be concealed by embedding the RFID tag 202 in a member surrounding the glass 101, such as the frame 106. Accordingly, contactless communication may be performed without degrading the appearance of the show window.

Further, since embedding alone suffices, such as embedding in surrounding members like the frame 106, major renovation work is unnecessary and installation costs may be reduced. Further, by using an active tag that is rewritable and has an internal power supply for the RFID tag 202, adding a contactless IC chip, etc., a longer operating life is possible and replacement work for the RFID tag 202 may be reduced.

As depicted in FIG. 2G, from a projection apparatus 203, display information related to distribution information written to the RFID tag 202 is projected on the transmissive screen 102 and is visible from a front side of the glass 101. The user 103 sees this display information, is interested, and using his communication terminal 104, performs short distance, contactless communication with the RFID tag 202 embedded in the frame 106. By this short distance, contactless communication, distribution information, a web address, etc. is downloaded to the communication terminal having a reader/writer function. Here, configuration may be such that a reader/writer function is on the 202 side and the communication terminal 104 has an RFID tag function.

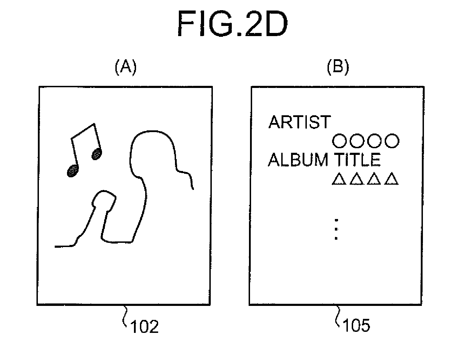

In FIG. 2D, (A) depicts the transmissive screen 102 and (B) depicts the display screen 105 of the communication terminal 104. Display information is displayed on the transmissive screen 102 and distribution information related to the display information is displayed on the display screen 105 of the communication terminal 104. The contents of the distribution information may be any type of information. For example, if the display information is the jacket of the latest album by a popular artist, the distribution information may be detailed information concerning the album (e.g., artist name, album title, track titles, etc.). Further, the distribution information may be coupon information for merchandising and indicating discounts, special benefits, point rebate increases, etc.

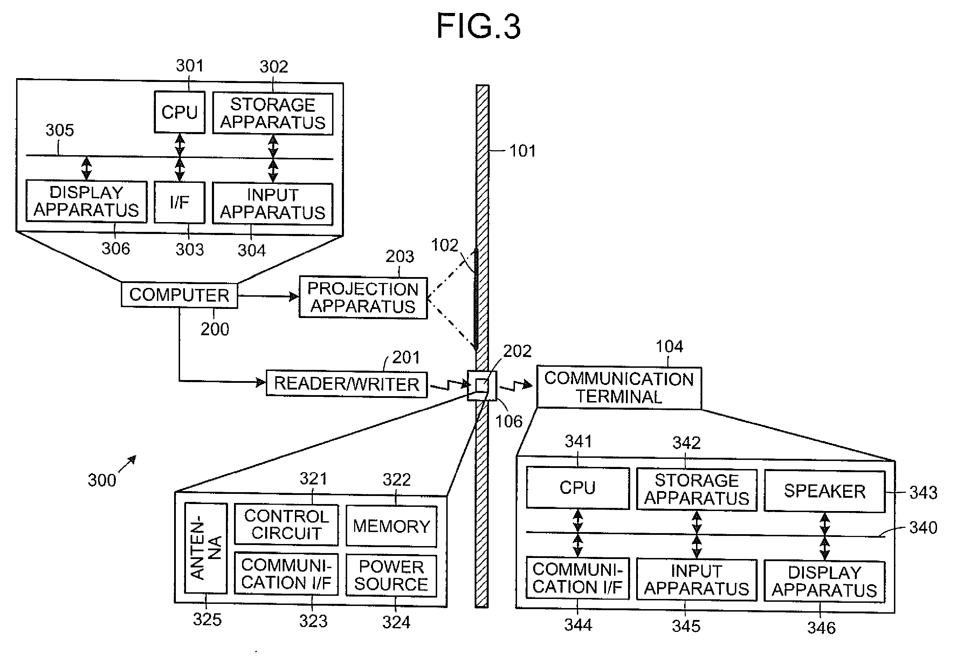

FIG. 3 is a block diagram of the information providing system and the communication terminal 104 according to the first embodiment. An information providing system 300 includes the computer 200, the projector apparatus 203, the reader/writer 201, and the RFID tag 202.

The computer 200 is provided in the store 100 and includes a computer processing unit (CPU) 301, a storage apparatus 302, an interface (I/F) 303, an input apparatus 304, and a display apparatus 306, respectively connected through a bus 305. The CPU 301 governs overall control of the computer 200. The storage apparatus 302 includes a read-only memory (ROM), a random access memory (RAM), a magnetic disk and magnetic disk drive, etc., stores therein various programs and content, and is used as a work area of the CPU 301. The I/F 303 controls the input and the output of data with respect to an external apparatus. The input apparatus 304 receives an input of information by user operation of a keyboard, mouse, touch panel, etc. The display apparatus 306 displays various types of information.

The RFID tag 202 is provided in the frame 106 and includes a control circuit 321, a memory 322, a communication I/F 323, a power source 324, and an antenna 325. The control circuit 321 governs overall control of the RFID tag 202. The memory 322 stores distribution information written thereto by the reader/writer 201. The communication I/F 323 performs contactless communication between the reader/writer 201 and the communication terminal 104 through the antenna 325. The power source 324 supplies power to the control circuit 321, the memory 322, and the communication I/F 323.

The communication terminal 104 is a mobile terminal of the user 103, such as a mobile telephone, a smart phone, a personal handyphone system (PHS) terminal, a portable game player, etc. The user 103 is one who uses the information providing system according to the first embodiment, irrespective of being a member of a preferred customer group of the store 100 and having a purchase history at the store 100.

The communication terminal 104 includes a CPU 341, a storage apparatus 342, a speaker 343, a communication I/F 344, an input apparatus 345, and a display apparatus 346, respectively connected through bus 340. The CPU 341 governs overall control of the communication terminal 104. The storage apparatus 342 includes a ROM, a RAM, a magnetic disk and magnetic disk drive, etc., stores therein various programs and content, and is used as a work area of the CPU 341. The speaker 343 outputs audio such as music data, special effects, ringtones, etc. The communication I/F 344 performs contactless communication between a wireless communication network and the RFID tag 202. The input apparatus 345 includes a numeric keypad, buttons, a touch panel, etc. The display apparatus 346 includes the display screen 105 and displays information stored in the storage apparatus 342.

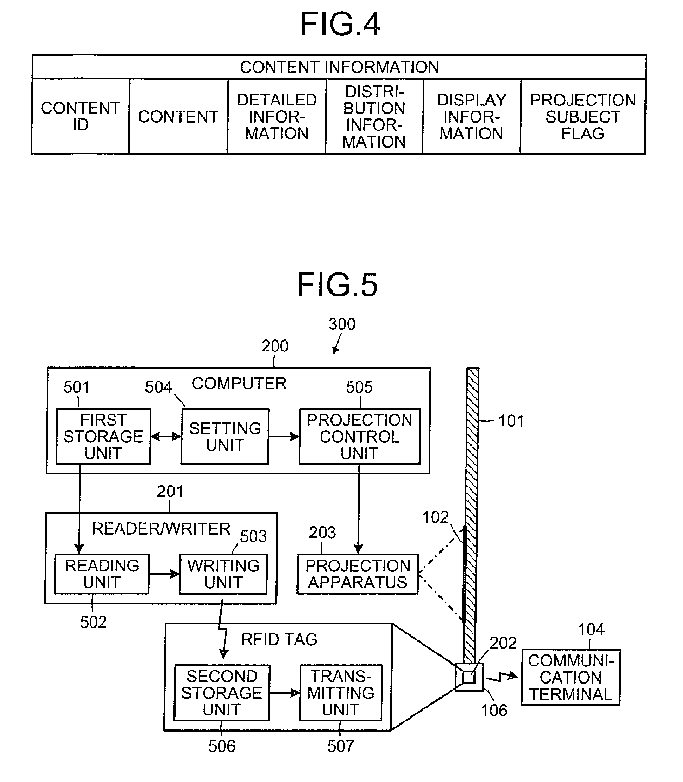

FIG. 4 is a schematic of one example of the data configuration of content information stored in the storage apparatus 302 of the computer 200. Content information is configured to include a content ID, the content (the actual data), detailed information, distribution information, display information, and a projection subject flag. The content ID is identification information that uniquely identifies the content. The content is data corresponding to merchandise, services, etc. on the provider side, such as music data, video data, and merchandise data. Detailed information is specific information concerning the content and may include, for example, the title of the content, the name of the creator, track names, genre, date of release, price, images of the merchandise, and other details.

Distribution information is information distributed to the communication terminal 104 of the user 103 from the RFID tag 202, and may be specially processed or selected from among the detailed information. The display information is information displayed on the transmissive screen 102 and may be specially processed or selected from among the detailed information.

The projection subject flag is a flag that indicates whether the display information of the content is to be projected by the projection apparatus 203. If the flag is "on", the display information is to be projected; and if "off", the display information is not to be projected. If distribution information has been readout by the reader/writer 201, the flag is "on". On the other hand, if re-connection of the reader/writer 201 is detected, the flag is reset to off.

FIG. 5 is a functional diagram of the information providing system according to the first embodiment. As depicted in FIG. 5, the information providing system 300 includes a first storage unit 501, a reading unit 502, a writing unit 503, a second storage unit 506, a setting unit 504, a projection control unit 505, and a transmitting unit 507. The first storage unit 501, the setting unit 504, and the projection control unit 505 are functions included in the computer 200. The reading unit 502 and the writing unit 503 are functions included in the reader/writer 201. The second storage unit 506 and the transmission unit 507 are functions included in the RFID tag 202.

The first storage unit 501 has a function of storing therein content information and specifically, for example, stores the content information having the data configuration depicted in FIG. 4. The first storage unit 501 is implemented by the storage apparatus 302 depicted in FIG. 3.

The reading unit 502 has a function of reading out distribution information related to the content stored in the computer 200. Specifically, for example, when the reader/writer 201 is connected to the computer 200, distribution information concerning specified content is read out from the computer 200 and stored in the internal memory of the reader/writer 201.

The writing unit 503 has a function of writing from the reader/writer 201 to the RFID tag 202 embedded in the surrounding members of the transparent panel, the distribution information read out by the reading unit 502. Specifically, for example, the store clerk moves the reader/writer 201 to be in a communication area of the RFID tag 202, and thereby, performs contactless communication with the RFID tag 202. By designating the writing mode in the reader/writer 201, the distribution information is transmitted to the internal memory 322 of the RFID tag 202, and thereby is written to the second storage unit 506 (the internal memory 322 of the RFID tag 202).

The setting unit 504 has a function of setting, as a projection subject, display information that is related to the content for which distribution information has been read out by the reading unit 502. Specifically, for example, the content ID of the content for which distribution information has been read out by the reader/writer 201 is designated and the projection subject flag of the content is set to "on". The setting unit 504, specifically, for example, is implemented by the CPU 301 executing a program stored in storage apparatus 302 depicted in FIG. 3.

The projection control unit 505 has a function of projecting the projection subject set by the setting unit. The projection control unit 505 projects the projection subject on the transmissive screen 102 provided on the back surface of the transparent plate, by controlling the projection apparatus 203 connected to the computer 200. Specifically, for example, the display information of the content for which the projection subject flag is "on" is read out and output to the projection apparatus 203. The projection control unit 505, specifically, for example, is implemented by the CPU 301 executing a program stored in the storage apparatus 302 depicted in FIG. 3.

The projection apparatus 203 writes the display information output thereto to an internal memory and projects the display information on the transmissive screen 102. When there is no projection subject, nothing is projected and the power of the projection apparatus 203 may be turned off, or a sleep mode may be initiated. Further, the power may be left on with the projector lens covered. Thus, when nothing is displayed on the transmissive screen 102, as usual, the appearance of the interior of the store 100, merchandise on display, etc. may be viewed from outside the store 100.

The transmission unit 507 has a function of transmitting distribution information from the RFID tag 202 to the communication terminal 104 by short distance, contactless communication between the communication terminal 104 on the front side of the transparent plate and the RFID tag 202. Specifically, for example, when the communication terminal 104 enters the communication area of the RFID tag 202, distribution information written in the second storage unit 506 is transmitted to the communication terminal 104.

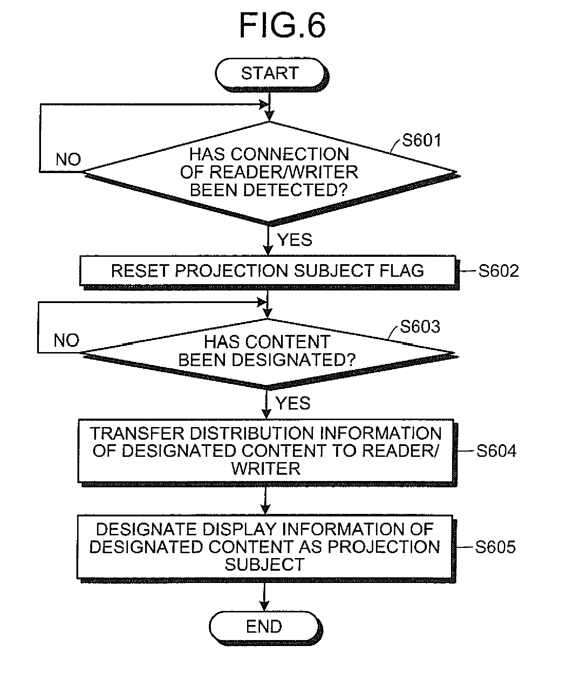

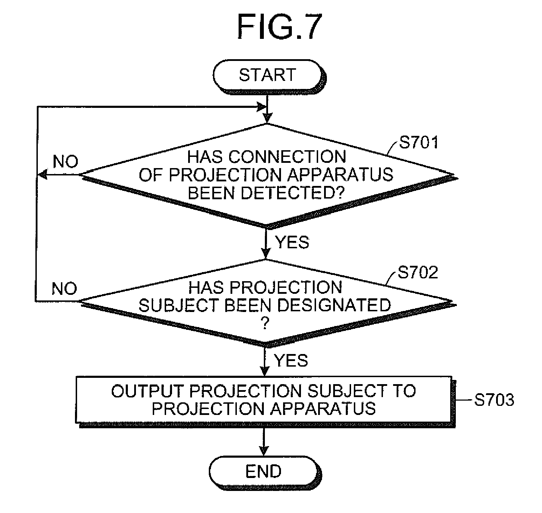

FIGs. 6 and 7 are flowcharts of processing by the computer 200 in the information providing system according to the first embodiment. Detection of connection of the reader/writer 201 is waited for (step S601: NO). When connection of the reader/writer 201 is detected (step S601: YES), the flags for all content are reset (step S602).

Designation of content from the input apparatus 304 is waited for (step S603: NO). When content has been designated (step S603: YES), the distribution information of the designated content is read from the storage apparatus 302 and transferred to the reader/writer 201 (step S604). The display information of the designated content is set as a projection subject (step S605), i.e., the projection subject flag thereof is raised.

As depicted in FIG. 7, detection of the connection of the projection apparatus 203 is waited for (step S701: NO). When the connection of the projection apparatus 203 is detected (step S701: YES), it is determined whether a projection subject has been designated (step S702). If no projection subject has been designated (step S702: NO), the flow returns to step S701. On the other hand, if a projection subject has been designated (step S702: YES), the designated projection subject is output to the projection apparatus 203 (step S703). Thus, the display information of the projection subject is projected on the transmissive screen 102 from the projection apparatus 203.

Thus, in the first embodiment, embedding of the RFID tag 202 in the frame 106 of the glass 101, which borders the inside and the outside of a facility (the store 100), enables a bridge for communication therebetween to be realized at a low cost.

In particular, by embedding the RFID tag 202 in a member of the frame 106, etc. rather than in the glass 101, the RFID tag 202 does not interfere with the display information displayed on the transmissive screen 102 or the show window, thereby enabling an attractive presentation of information.

Further, the attention of the user 103 is attracted to the display information displayed on the transmissive screen 102 and in the event the user 103 would like more information, detailed information may be acquired through the communication terminal 104 of the user 103 through the RFID tag 202. Hence, more detailed information may be provided compared to conventional methods such as the use of posters and merchandise displays, thus taking merchandising one step further. In other words, this means of providing information, as an opportunity to get customers to enter the store 100, effects merchandise purchases and enables services to be effectively provided.

If access from the communication terminal 104 is not possible, since nothing is projected on the transmissive screen 102, the interior of the store 100 may be viewed as usual from outside the store 100. Further, by occasionally displaying and not displaying display information on the transmissive screen 102, the appearance of the store 100 changes, enabling appearances different from a fixed appearance to be realized, and thereby realizing streets with individuality by a simple means.

Moreover, even if a visit to the store 100 is after closing, by displaying display information on the transmissive screen 102, the user 103 is able to receive the distribution information and thus, the visit is not fruitless and may serve as an opportunity for merchandise purchases and service provision during a subsequent visit. By turning off the lights in the store 100 after closing and displaying display information on the transmissive screen 102, information may be provided consuming a minimal amount of power while enabling use as a crime prevention measure.

A second embodiment will be described. In the first embodiment, a scheme is explained where distribution information is downloaded to the communication terminal 104 from the inside of the facility through the RFID tag 202 in the frame 106 and serving as a bridge between the inside of the facility and the communication terminal 104 of the user 103 outside the facility. In contrast, in the second embodiment, a scheme is explained where information from the communication terminal 104 of the user 103 is uploaded to the computer 200 inside the facility (e.g., the store 100) through a communication apparatus in the frame 106 and serving as a bridge between the facility and the communication terminal 104 of the user 103.

The uploaded information may be information corresponding to personal interests of the user 103. In this embodiment, information authorized in advance by an authorizing institution (e.g., information embedded with an authorization code) is uploaded. In the second embodiment, components identical to those of the first embodiment are given the same reference numerals used in the first embodiment and description thereof is omitted herein.

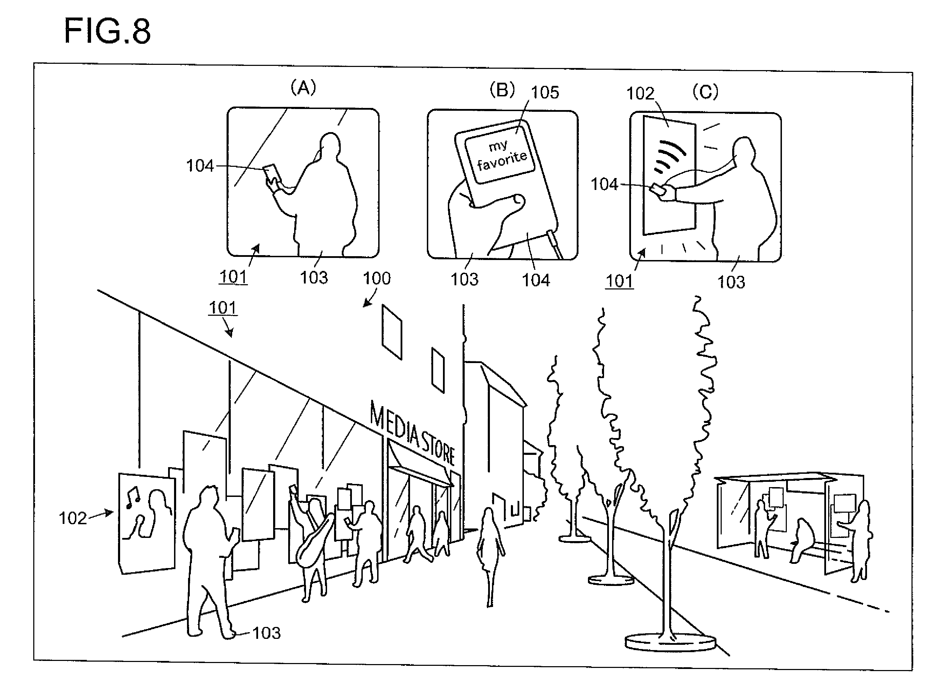

FIG. 8 is a view of a street on which the store 100 is located, in the second embodiment. When information is provided, (A) if the user 103 wants to display information on the transmissive screen 102, (B) the user 103 selects information desired for display from the communication terminal 104, (C) faces the store 100 and uploads the information (destination of upload described hereinafter), and thus, the uploaded information is displayed on the transmissive screen 102.

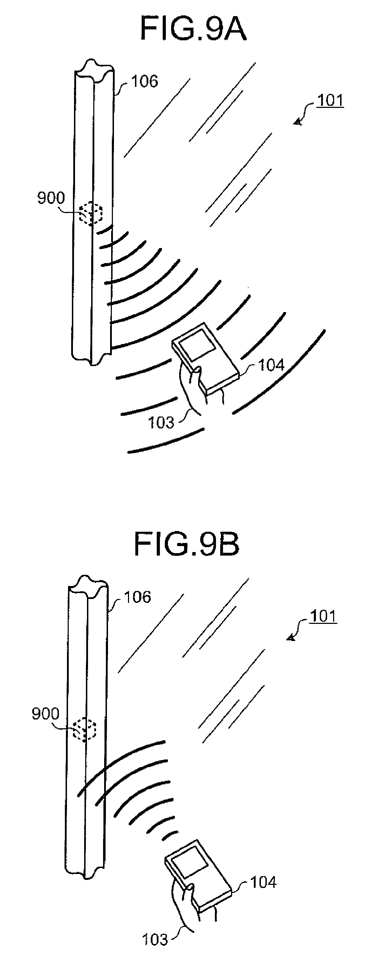

FIGs. 9A to 9C are schematics of operations for providing information according to the second embodiment. As depicted in FIG. 9A, a communication apparatus 900 embedded in the frame 103 detects that the user 103 is in a vicinity of the communication apparatus 900. This detection is performed by, for example, an internal ultrasonic sensor of the communication apparatus 900.

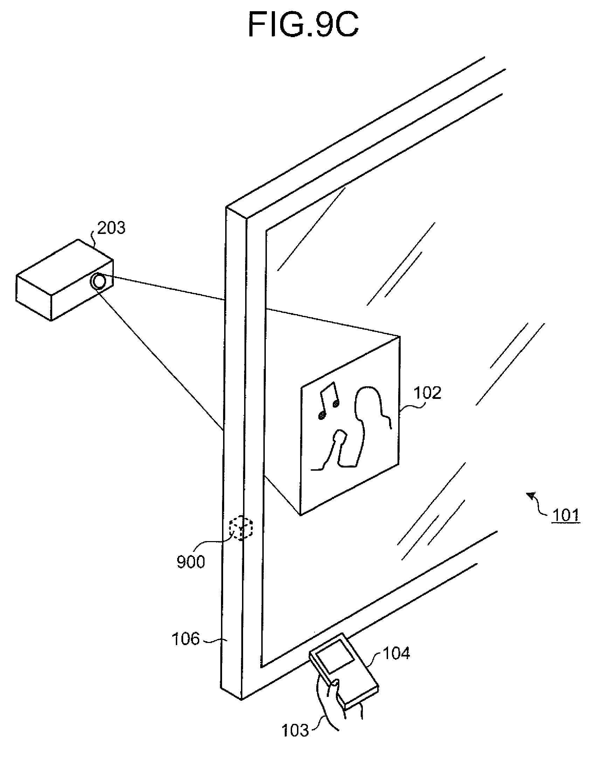

As depicted in FIG. 9B, information is uploaded from the communication terminal 104 of the user 103 to the communication apparatus 900 by short distance, contactless communication between the communication apparatus 900 and the communication terminal 104 of the user 103, for example, using Bluetooth (registered trade name). As depicted in FIG. 9C, the uploaded information is projected on the transmissive screen 102 from the projection apparatus 203, thereby information stored in the communication terminal 104 of the user 103 is projected on the transmissive screen 102, and displayed through the glass 101.

In this manner, without attaching the communication apparatus 900 to the glass 101, the communication apparatus 900 may be concealed by embedding the communication apparatus 900 in the members surrounding the glass 101. Accordingly, contactless communication may be performed without degrading the appearance of the show window. Further, since embedding alone suffices, such as embedding in a surrounding member like the frame 106, major renovation work is unnecessary and installation costs may be reduced.

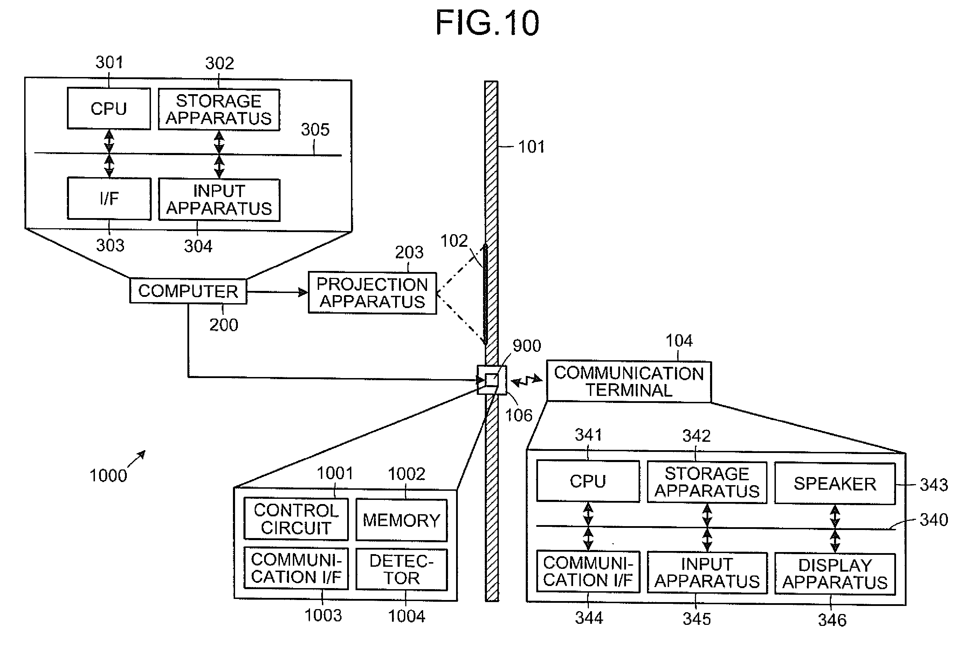

FIG. 10 is a block diagram of an information providing system 1000 and the communication terminal 104 according to the second embodiment. An information providing system 1000 includes the computer 200, the projection apparatus 203, and the communication apparatus 900.

The communication apparatus 900 is installed in the frame 106 and includes a control circuit 1001, a memory 1002, a communication I/F 1003, and a detector 1004. The control circuit 1001 governs overall control of the communication apparatus 900. The memory 1002 stores information written thereto by the communication terminal 104. The communication I/F 1003 performs contactless communication with the communication terminal 104 and communication with the computer 200. The detector 1004 detects a person outside the store 100 in a vicinity of the communication apparatus 900, and may be an ultrasonic sensor.

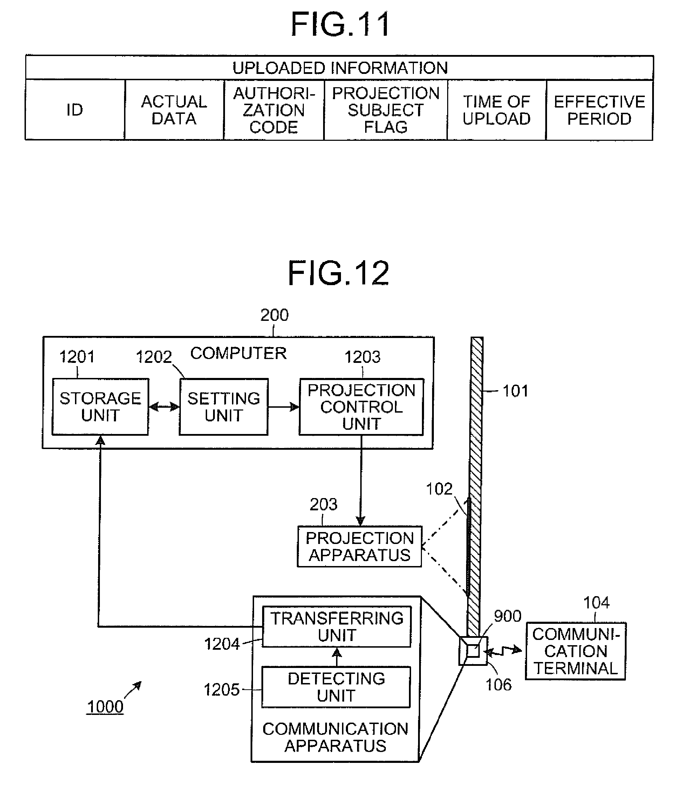

FIG. 11 is a schematic of the data configuration of uploaded information. Uploaded information is configured to include an ID, the actual data, an authorization code, a projection subject flag, the time of upload, and an effective period. An ID is identification information that uniquely identifies the uploaded information. An authorization code is a code indicating whether the actual data has been authorized in advance at an authorizing institution. If an authorization code is not included or is different, the actual data cannot be set as a projection subject. In other words, if the user 103 wishes to display information, the information has to have pre-authorization to thereby, for example, prevent the display of offensive information.

The time of upload is the time at which the uploaded information was uploaded, e.g., the time at which the uploaded information is written to a storage unit (time stamp). The effective period is the period during which uploaded information set by an authorizing institution may be displayed. The effective period is reckoned from the time of upload. When the effective period has elapsed, projection is terminated.

FIG. 12 is a functional diagram of the information providing system 1000. As depicted in FIG. 12, the information providing system 1000 includes a storage unit 1201, a setting unit 1202, a projection control unit 1203, a transferring unit 1204, and a detecting unit 1205. The storage unit 1201, the setting unit 1202, and the projection control unit 1203 are functions included in the computer 200. The transferring unit 1204 and the detecting unit 1205 are functions included in the communication apparatus 900.

The storage unit 1201 has a function of storing uploaded information having the data configuration depicted in FIG. 11 and is implemented by the storage apparatus 302 depicted in FIG. 10.

The setting unit 1202 has a function of setting uploaded information as a projection subject, specifically, for example, by raising the projection subject flag in the uploaded information. The setting unit 1202, specifically, for example, is implemented by the CPU 301 executing a program stored in the storage apparatus 302 depicted in FIG. 10.

Further, the setting unit 1202 determines whether an authorization code is included, or whether the authorization code coincides with a specified code. If an authorization code is included, or coincides with a specified code, the setting unit 1202 may set the uploaded information (strictly, the actual data thereof) as a projection subject. Thereby, projection may be limited to pre-authorized information.

By controlling the projection apparatus 203 connected to the computer 200, the projection control unit 1203 has a function of projecting a projection subject set by the setting unit 1202 on the transmissive screen 102 provided on the back surface of the transparent panel. Specifically, for example, uploaded information having a projection subject flag set to "on" is output to the projection apparatus 203.

If the effective period has elapsed, the projection control unit 1203 terminates projection of the projection subject. Specifically, for example, the uploaded information written to the internal memory of the projection apparatus 203 is deleted. Further, the power of the projection apparatus 203 may be turned off, a sleep mode may be initiated, or the projector lens may be covered with the power left on. The projection control unit 1203, specifically, for example, is implemented by the CPU 301 executing a program stored in the storage apparatus 302 depicted in FIG. 10.

The transferring unit 1204 has a function of transferring uploaded information transmitted thereto from the communication terminal 104 to the storage unit 1201 of the computer 200. Specifically, by short distance, contactless communication between the communication I/F 1003 of the communication apparatus 900 and the communication I/F 344 of the communication terminal 104 by Bluetooth (registered trade name), etc., uploaded information is written to the memory 1002, and the written uploaded information is transmitted to the storage unit 1201. The transferring unit 1204, specifically, for example, is implemented by the communication I/F 1003 depicted in FIG. 10.

The detecting unit 1205 has a function of detecting a person outside the facility (the store 100). The detecting unit 1205 has a detection range that occupies an area smaller than the communication area for the short distance, contactless communication between the communication apparatus 900 and the communication terminal 104. Thus, only the communication terminal 104 of the user 103 detected by the detecting unit 1205 is able to communicate with the communication apparatus 900. The detecting unit 1205, specifically, for example, is implemented by the detector 1004 (e.g., ultrasonic sensor) depicted in FIG. 10. Further, the detecting unit 1205 may be selectively used in the information providing system 1000.

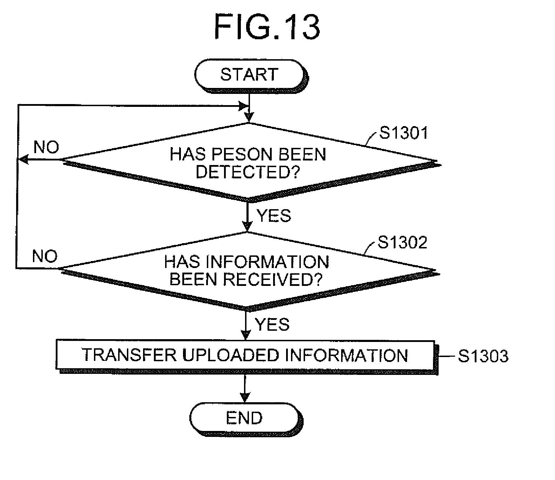

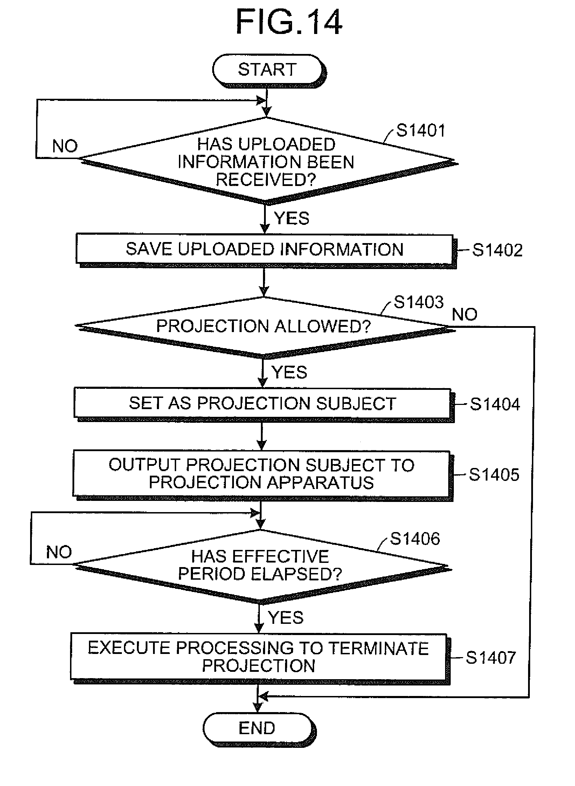

FIGS. 13 and 14 are flowcharts of processing for providing information according to the second embodiment. FIG. 13 depicts processing executed by the communication apparatus 900 and FIG. 14 depicts processing executed by the computer 200.

As depicted in FIG. 13, detection of a person by the detector 1004 is waited for (step S1301: NO). When a person is detected (step S1301: YES), the reception of information from the communication terminal 104 is waited for (step S1302: NO). When the information is received (step S1302: YES), the information is transferred to the computer 200 as uploaded information (step S1303).

As depicted in FIG. 14, reception of the uploaded information is waited for (step S1401: NO). When the uploaded information is received (step S1401: YES), the uploaded information is saved to the storage apparatus 302 (step S1402). At this time, a time stamp is also written. The authorization code of the uploaded information is checked to determine whether projection is allowable (step S1403). If projection is not allowable (step S1403: NO), a series of the processing ends.

On the other hand, if projection is allowable (step S1403: YES), the uploaded information is set as a projection subject (step S1404), and is output to the projection apparatus 203 (step S1405). Consequently, since the uploaded information is projected on the transmissive screen 102 by the projection apparatus 203, the information from the communication terminal 104 of the user 103 is displayed through the glass 101. The elapse of the effective period is waited for (step S1406: NO). When the effective period has elapsed (step S1406: YES), processing to terminate the projection is executed (step S1407). Consequently, the uploaded information ceases to be projected from the projection apparatus to the transmissive screen 102, ending display of the uploaded information and thereby, terminating a series of the processing.

In this manner, in the second embodiment, embedding of the communication apparatus 900 in the frame 106 of the glass 101, which borders the inside and the outside of a facility (the store 100), enables a bridge for communication therebetween to be realized at a low cost.

In particular, by embedding the RFID tag 202 in a member of the frame 106, etc. rather than in the glass 101, the RFID tag 202 does not interfere with the display information displayed on the transmissive screen 102 or the show window, thereby enabling an attractive presentation of information.

If there is no access by the communication terminal 104, nothing is displayed on the transmissive screen 102 and hence, the interior of the store 100 may be viewed as usual from outside the store 100. Further, by occasionally displaying and not displaying the uploaded information on the transmissive screen 102, the appearance of the store 100 changes, enabling appearances difference from a fixed appearance to be realized, and thereby realizing streets with individuality by a simple means.

Further, by turning off the lights in the store 100 after closing and displaying the uploaded information on the transmissive screen 102, information may be provided consuming a minimal amount of power while enabling use as a crime prevention measure.

Images captured, created, or acquired by the user 103 may be uploaded and displayed; thus, various information may be displayed similarly to posters. Accordingly, without becoming dirty or peeling during bad weather like posters, such display enables effective advertising to be implemented. Further, since posting work as that for posters is unnecessary and uploading is completed merely by operation of the communication terminal 104, work efficiency may be improved.

Uploaded information is pre-authorized and is embedded with an authorization code, thereby enabling information to be narrowed to beneficial information and innocuous information on the facility side.

A third embodiment will be described. Similar to the second embodiment, the third embodiment is a scheme of uploading from the communication terminal 104 of the user 103. However, without projection of uploaded information by the projection apparatus 203 like in the second embodiment, in the third embodiment, the computer 200 in the facility (the store 100) searches for information related to information that has been uploaded and projects the information retrieved. Components identical to those of the first embodiment and the second embodiment are given the same reference numerals used in the first and the second embodiments, and description thereof is omitted herein.

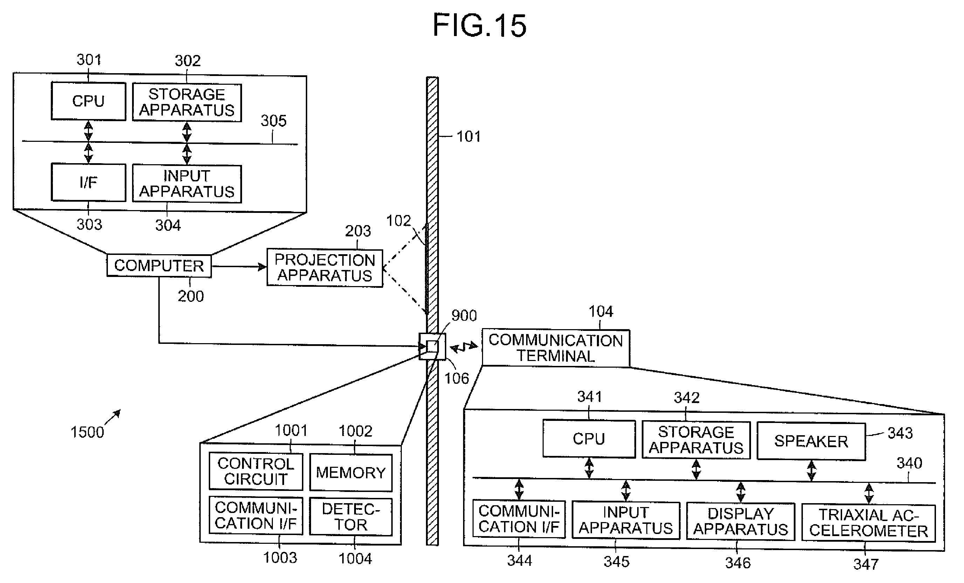

FIG. 15 is a block diagram of an information providing system 1500 and the communication terminal 104 according to the third embodiment. A point differing from FIG. 10 is the provision of a triaxial accelerometer in the communication terminal 104. A triaxial accelerometer 347 is a device capable of detecting the behavior of the communication terminal 104 including tilt direction, speed, and acceleration. In the third embodiment, information displayed on the transmissive screen 102 is scrolled according to behavior information obtained from the triaxial accelerometer 347. For example, if the communication terminal 104 is shaken to the right, scrolling is in the right direction; if the communication terminal 104 is shaken downward, scrolling is in the downward direction.

The communication terminal 104 transmits to the communication apparatus 900, attribute information indicative of search conditions. Attribute information is information concerning properties that may be used as search conditions, such as user information explained hereinafter, and the name, genre, etc. of content. The behavior information is also transmitted. The transmitted attribute information and behavior information are sent to the computer 200 through the communication apparatus 900.

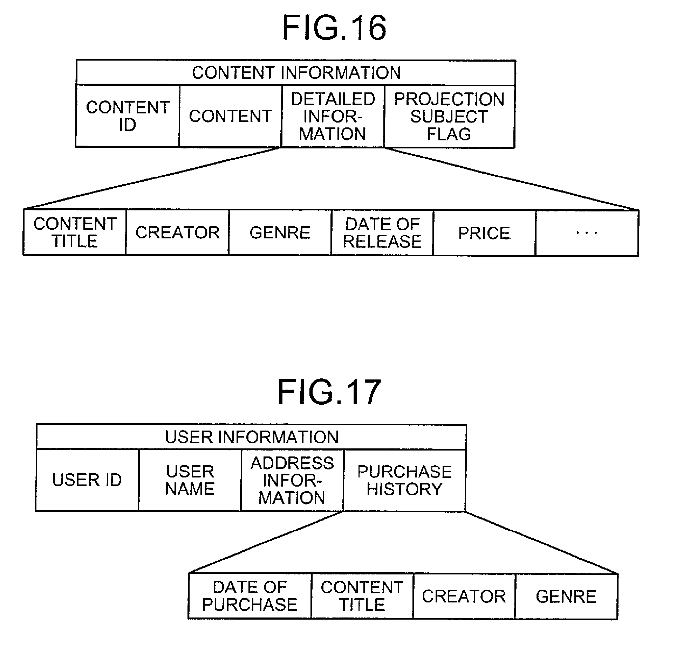

FIG. 16 is a schematic of one example of data configuration of content information. Content information is stored in the storage unit 302 of the computer 200 and configured to include a content ID, the content (the actual data), detailed information, and a projection subject flag. The content ID is identification information that uniquely identifies the content. The content is data corresponding to merchandise, services, etc. on the provider side, such as music data, video data, and merchandise data. Detailed information is specific information concerning the content and may include, for example, the content title, the name of the creator, track names, genre, date of release, price, images of the merchandise, and other details.

The projection subject flag is a flag that indicates whether the display information of the content is to be projected by the projection apparatus 203. If the flag is "on", the display information is to be projected; and if "off", the display information is not to be projected. The default setting of the projection subject flag is "off".

FIG. 17 is a schematic of one example of the data configuration of user information. User information is configured to include a user ID, a user name, address information, and a purchase history. A user ID is identification information uniquely identifying the user 103. A user name is the name of the user 103. Address information is information that includes the address, telephone number, and email address of the user 103. A purchase history is a log of past purchases by the user 103 and is configured to include, for example, the date of purchase, content title, creator, genre, etc. The content information and the user information are information used in a search.

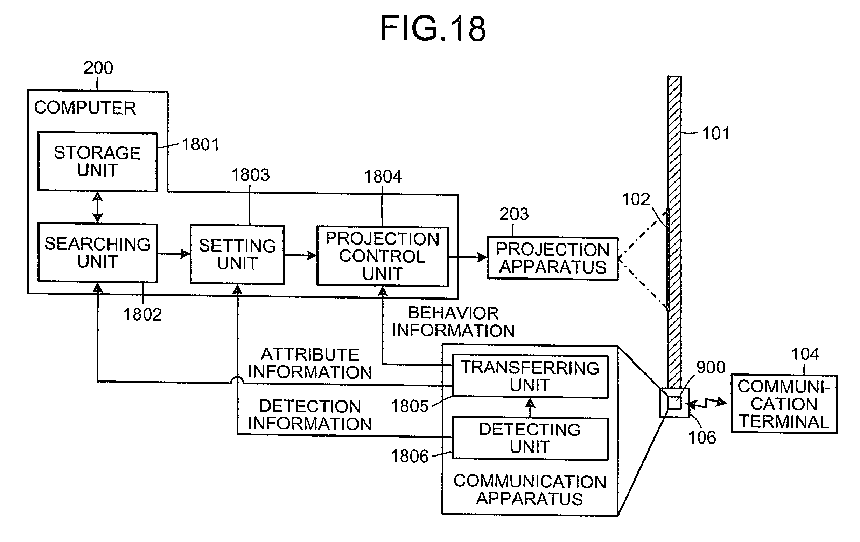

FIG. 18 is a functional diagram of an information providing system 1500 according to the third embodiment. As depicted in FIG. 18, the information providing system 1500 includes a storage unit 1801, a searching unit 1802, a setting unit 1803, a projection control unit 1804, a transferring unit 1805, and a detecting unit 1806. The storage unit 1801, the searching unit 1802, the setting unit 1803, and the projection control unit 1804 are functions included in the computer 200. The transferring unit 1805 and the detecting unit 1806 are functions included in the communication apparatus 900.

The storage unit 1801 has a function of storing therein content and user information having the data configurations depicted in FIGs. 16 and 17. The storage unit 1801 is implemented by the storage apparatus 302 depicted in FIG. 15.

The searching unit 1802 has a function of searching a database of the computer 200 for information corresponding to attribute information. Specifically, for example, among content information, user information, etc. stored in the storage unit 302, the searching unit 1802 searches for information related to attribute information. For example, if the attribute information is a user ID, the corresponding user information is search for; if the attribute information is the name of an artist, content information by the artist is searched for. Hereinafter, information that is retrieved as a result of the search is referred to as retrieved information. The searching unit 1802, specifically, for example, is implemented by the CPU 301 executing a program stored in the storage apparatus 302 depicted in FIG. 15.

The setting unit 1803 has a function of setting retrieved information as a projection subject. Specifically, for example, the setting unit 1803 sets the projection subject flag to "on". When the detector 1004 no longer detects a person, the projection subject flag is set to "off". The setting unit 1803, specifically, for example is implemented by the CPU 301 executing a program stored in the storage apparatus 102 depicted in FIG. 15.

By controlling the projection apparatus 203 connected to the computer 200, the projection control unit 1804 has a function of projecting a projection subject on the transmissive screen 102 provided on the back surface of the transparent panel. The retrieved information that is to be projected is edited and processed into a list by a given algorithm. If the display information of the content information has been preset, the display information is output to the projection apparatus 203.

If behavior information has been obtained, the projection apparatus 203 is controlled according to the behavior information. For example, if behavior information indicating that the communication terminal 104 has been shaken to the right is received, the projection range is scrolled toward the right. In this manner, according to behavior information when the user 103 shakes the communication terminal 104 up, down, to the left, or to the right, the projection range is controlled. The projection control unit 1804, specifically, for example, is implemented by the CPU 301 executing a program stored in the storage apparatus 302 depicted in FIG. 15.

The transferring unit 1805 has a function of transferring to the computer 200, attribute information and behavior information transmitted from the communication terminal 104. Specifically, by short distance, contactless communication between the communication I/F 1003 of the communication apparatus 900 and the communication I/F 344 of the communication terminal 104, for example, using Bluetooth (registered trade name), attribute information and behavior information are written to the memory and the written attribute information is transmitted to the searching unit 1802 while the behavior information is transmitted to the projection control unit 1804. The transferring unit 1805, specifically, for example, is implemented by the communication I/F 1003 depicted in FIG. 15.

The detecting unit 1806 has a function of detecting a person outside a facility (the store 100) and has a detection range that occupies an area smaller than the communication area for the short distance, contactless communication between the communication apparatus 900 and the communication terminal 104. Thus, only the communication terminal 104 of the user 103 detected by the detecting unit 1806 is able to communicate with the communication apparatus 900. Detection information is sent to the transferring unit 1805 and the setting unit 1803. The transferring unit 1805 transfers the attribute information and the behavior information if a person is detected by the detecting unit 1806.

Detection information is also sent to the setting unit 1803. At the setting unit 1803, projection subject flags are set and changed according to the contents of detection information. Specifically, if a projection subject flag is "off" and detection information is received indicating detection of a person, the projection subject flag is set to "on". If subsequently, detection information is received indicating that a person has not been detected, the projection subject flag is returned to "off".

In this manner, communication is possible only near the glass 101 (strictly, the communication apparatus 900 in the frame 106) and when the user 103 moves away, projection automatically ceases and the show window returns to its original state. Consequently, remote operation is prevented and users 103 near the store 100 may be preferentially provided information. Further, facing the detector 1004 outside the store 100 prevents errant detection inside the store 100. The detecting unit 1806, specifically, for example, is implemented by the detector 1004 (e.g., ultrasonic sensor) depicted in FIG. 15.

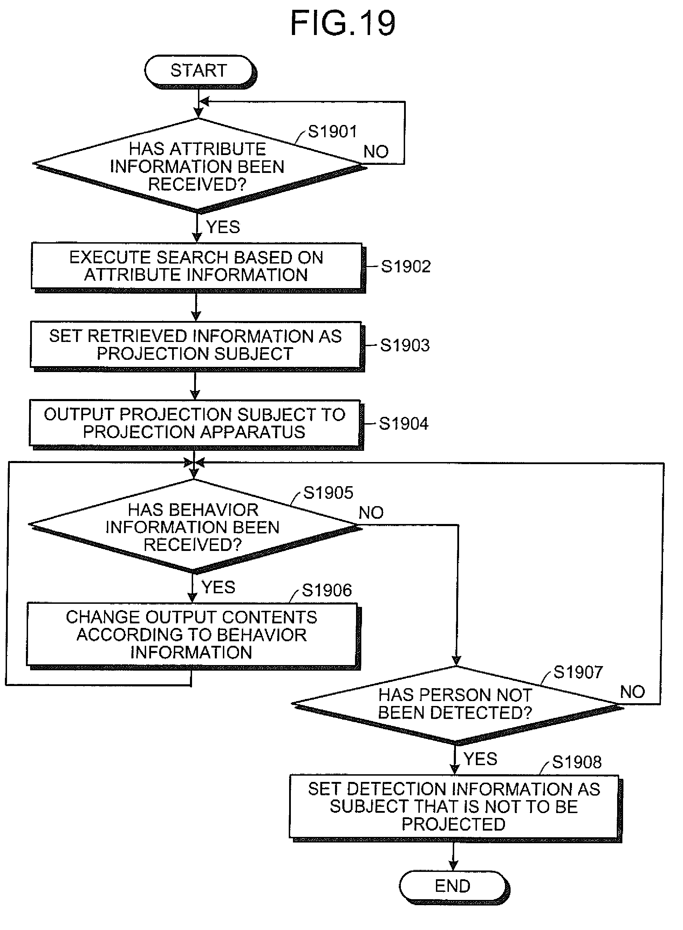

FIG. 19 is a flowchart of processing for providing information according to the third embodiment. FIG. 19 depicts processing executed by the computer 200. Reception of attribute information from the communication apparatus 900 is waited for (step S1901: NO). When attribute information is received (step S1901: YES), the searching unit 1802 executes a search based on the attribute information (step S1902). The retrieved information is set as a projection subject (step S1903), and output to the projection apparatus 203 (step S1904).

Subsequently, it is determined whether behavior information has been received (step S1905). If behavior information has been received (step S1905: YES), the contents output to the projection apparatus 203 are changed according to the behavior information (step S1906), and flow returns to step S1905. On the other hand, if behavior information is not received (step S1905: NO), it is determined whether a person has not been detected by the detector 1004 (step S1907). If a person has been detected (step S1907: NO), the flow returns to step S1905. On the other hand, if a person has not been detected (step S1907: YES), the detection information is set as a subject that is not to be projected (step S1908), ending a series of the processing.

Thus, in the third embodiment, embedding of the communication apparatus 900 in the frame 106 of the glass 101, which borders the inside and the outside of a facility (the store 100), enables a bridge for communication therebetween to be realized at a low cost.

In particular, by embedding the communication apparatus 900 in a member of the frame 106 rather than in the glass 101, the communication apparatus 900 does not interfere with the displayed information or the show window, thereby enabling an attractive presentation of information.

If access from the communication terminal 104 is not possible, since nothing is projected on the transmissive screen 102, the interior of the store 100 may be viewed as usual from outside the store 100. Further, by occasionally displaying and not displaying display information on the transmissive screen 102, the appearance of the store 100 changes, enabling appearances different from a fixed appearance to be realized, and thereby realizing streets with individuality by a simple means.

Further, by turning off the lights in the store 100 after closing and displaying the uploaded information on the transmissive screen 102, information may be provided consuming a minimal amount of power while enabling use as a crime prevention measure.

Images captured, created, or acquired by the user 103 may be uploaded and displayed; thus, various information may be displayed similarly to posters. Accordingly, without becoming dirty or peeling during bad weather like posters, such display enables effective advertising to be implemented. Further, since posting work as that for posters is unnecessary and uploading is completed merely by operation of the communication terminal 104, work efficiency may be improved.

By preparing an independent database that cannot be searched or browsed from the internet for the store 100, retrieved information that is unique may be displayed. Such retrieved information is information that cannot be received without visiting the store 100 and thus, may bring users 103 to the store 100 and improve the rate of visiting users 103.

As described, according to the first to the third embodiments, by embedding in the frame 106 or a protective member of the glass 101, a communication means of connecting the computer 200, such as the RFID tag 202 and the communication apparatus 900, inside the facility with the communication terminal 104 outside the facility, effective information provision meeting diversified needs may be realized with little burden.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. An information providing method comprising:
writing to a storage area of a communication apparatus embedded in a surrounding member of a transparent panel, distribution information related to preliminarily stored content;
displaying on a screen provided on the transparent panel, display information related to the content for which the distribution information has been read at the writing; and
transmitting to a communication terminal near the transparent panel by wireless communication, the distribution information stored in the storage area of the communication apparatus.

2. An information providing method comprising:
acquiring, by a communication apparatus embedded in a surrounding member of a transparent panel, information from a communication terminal near the communication apparatus; and
displaying the acquired information on a transmissive screen provided on the transparent panel.

3. The information providing method according to claim 2 further comprising:
detecting, by a sensor embedded in the surrounding member, a person at a front side of the transparent panel and near the sensor, wherein
the acquiring includes acquiring the information when a person is detected at the detecting.

4. The information providing method according to claim 2 or 3 further comprising:
determining whether the information from the communication terminal may be displayed, based on an authorization code included in the information and related to display authorization for the information, wherein
the displaying includes displaying the information when the information is determined to be displayable at the determining.

5. The information providing method according to any one of claims 2 to 4 further comprising:
terminating display of the information, based on an effective period included in the information.

6. An information providing method comprising:
acquiring from a communication terminal near a communication apparatus and accumulating in a database, attribute information, by the communication apparatus embedded in a surrounding member of a transparent panel;
retrieving from the database, information corresponding to the acquired attribute information; and
projecting the retrieved information on a transmissive screen provided on the transparent panel.

7. The information providing method according to claim 6 further comprising:
detecting, by a sensor embedded in the surrounding member, a person near the sensor, wherein
the acquiring includes acquiring the attribute information when a person has been detected at the detecting.

8. The information providing method according to claim 6 or 7 further comprising:
projecting the retrieved information on the transmissive screen provided on a back side of the transparent panel and based on behavior information for the communication terminal obtained from an acceleration sensor of the communication terminal.

9. The information providing method according to claim 7, wherein
the projecting includes not projecting the information when a person has not been detected by the sensor at the detecting.

10. The information providing method according to any one of claims 1 to 9, wherein the surrounding member is a frame of the transparent panel.

11. The information providing method according to any one of claims 1 to 10, wherein the transparent panel forms a wall of a facility.

12. The information providing method according to claim 11, wherein the wall is an exterior wall of the facility.

13. An information providing system comprising:
a reading unit that reads distribution information related to preliminarily stored content;
a writing unit that writes to a storage area of a communication unit embedded in a surrounding member of a transparent panel, the distribution information read at the reading;
a control unit that causes, on a transmissive screen provided on the transparent panel, display of display information related to content for which the distribution information has been read at the reading; and
a transmitting unit that transmits to a communication terminal near the transparent panel by contactless communication between the communication unit and the communication terminal, the distribution information stored in the storage area of the communication unit.

14. An information providing system comprising:
an acquiring unit that by a communication apparatus embedded in a surrounding member of a transparent panel, acquires information from a communication terminal near the transparent panel;
a setting unit that sets the acquired information as a projection subject; and
a control unit that by controlling a projection apparatus connected to a computer, causes, on a transmissive screen provided on the transparent panel, display of a projection subject set by the setting unit.

15. An information providing system comprising:
an accumulating unit that by a communication apparatus embedded in a surrounding member of a transparent panel, receives attribute information from a communication terminal near the communication apparatus and accumulates the attribute information in a database;
a retrieving unit that retrieves from the database, information corresponding to the attribute information transferred by a transferring unit; and
a control unit that causes the retrieved information to be displayed on a transmissive screen provided on the transparent panel.
